# EUROPÄISCHE PATENTSCHRIFT

(11) **EP 2 725 855 B1**
(45) Veröffentlichungstag und Bekanntmachung des Hinweises auf die Patenterteilung: **18.05.2016**
(21) Anmeldenummer: 12189978.5
(22) Anmeldetag: 25.10.2012
(51) Int. Cl.: H04W 56/00, H04W 36/00

(54) **Verfahren zur zeitlichen Synchronisation in einem Funkkommunikationssystem**
Method for time synchronisation in a radio communication system
Procédé de synchronisation temporelle dans un système de communication radio

(43) Veröffentlichungstag der Anmeldung: 30.04.2014
(73) Patentinhaber: Siemens Convergence Creators GmbH, 1210 Wien (AT)
(72) Erfinder: Slanina, Peter, 3441 Judenau (AT); Bublin, Mugdim, 1150 Wien (AT); Kambourov, Iavor, 1110 Wien (AT)
(74) Vertreter: Maier, Daniel Oliver

(56) Entgegenhaltungen:
- EP-A2- 1 073 216
- WO-A1-99/23847
- US-A1- 2010 103 903
- US-B1- 6 393 281

## Beschreibung

### Technisches Gebiet

Die Erfindung betrifft allgemein das Gebiet der Kommunikationstechnik. Im Speziellen bezieht sich die vorliegende Erfindung auf ein Verfahren zur zeitlichen Synchronisation in einem zellulären, unsynchronisierten Funkkommunikationssystem. Dabei umfasst das Funkkommunikationssystem zumindest eine erste Funkstation, eine zweite Funkstation sowie zumindest eine Mobileinheit, welche eine Verbindung mit der ersten Funkstation aufweist, und von welcher zur zweiten eine Verbindung aufgebaut werden kann.

### Stand der Technik

Innerhalb von Funkkommunikationssystemen werden Nachrichten wie z.B. Sprachinformationen, Bildinformationen, Videoinformationen, Short Message Service, Multimedia Messaging Service oder Daten, mit Hilfe von elektromagnetischen Wellen über eine Funkschnittstelle zwischen einer sendenden und/oder empfangenden Funkstation und einer sendenden und/oder empfangenden Mobileinheit übertragen. Bei den Funkstationen des Funkkommunikationssystems kann es sich je nach konkreter Ausgestaltung (z.B. Mobilfunknetz, Wireless LAN, etc.) z.B. um Basisstationen, Zugangspunkte, etc handeln. Über eine Mobileinheit wie z.B. Funkmodem, mobiles Endgeräte, etc. erhält dann ein Teilnehmer einen Zugang zum Funkkommunikationssystem, um z.B. Nachrichten zu empfangen oder zu versenden.

Derartige Funkkommunikationssysteme sind oftmals als so genannte zelluläre Systeme aufgebaut - wie z.B. ein Funkkommunikationssystem nach dem Global System for Mobile Communication- oder GSM-Standard, nach dem Universal Mobile Telecommunications System- oder UMTS-Standard oder nach dem Long Term Evolution- oder LTE-Standard. Außer diesen weiträumig organisierten zellularen, hierarchischen Netzen gibt es auch drahtlose lokale Netze so genannte WLANs oder Wireless Local Area Networks mit einem in der Regel räumlich deutlich stärker begrenzten Funkabdeckungsbereich. Um eine weiträumige Abdeckung für beispielsweise eine drahtlose Zugangstechnik zu Breitbandinternetdiensten zu ermöglichen, wurde ausgehend vom WLAN-Standard IEEE 802.11 der IEEE-Standard 802.16 für ein Funkkommunikationssystem - das sogenannte WiMAX oder Worldwide Interoperability for Microwave Access - entwickelt.

Ein Zugriff von Mobileinheiten auf ein gemeinsames Übertragungsmedium wird bei einem Funkkommunikationssystem durch Vielfachzugriffsverfahren bzw. Multiplexverfahren geregelt. Bei diesen Vielfachzugriffsverfahren kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Mobileinheiten aufgeteilt werden. Es sind auch Kombinationen von Vielfachzugriffsverfahren möglich wie z.B. eine Kombination aus Frequenzbereichs-Vielfachzugriffsverfahren mit einem Codebereichs-Vielfachzugriffsverfahren.

Insbesondere für Funkkommunikationssystem der so genannten vierten Generation wie z.B. ein Funkkommunikationssystem auf Basis des LTE-Standards oder auf Basis von WiMAX, etc. wird das so genannte orthogonale Frequenzmultiplexverfahren oder Orthogonal Frequency-Division Multiplexing (OFDM) eingesetzt. Dabei wird ein breites Frequenzband in eine Anzahl von Subbändern aufgeteilt, auf welchen dann die Nachrichten bzw. Informationen übertragen werden. Einer Mobilstation kann dabei eine Teilmenge oder alle Subbänder zugewiesen werden. Mit Hilfe dieser Funknetztechnologie können dann beispielsweise sehr schnelle Datenverbindungen über eine Funkschnittstelle aufgebaut werden, über welche von Teilnehmern insbesondere Datendienste (z.B. Übertragung von Videodaten, Audiodaten, etc.) genutzt werden können.

Auf OFDM-Verfahren basierende Funkkommunikationssystem wie z.B. LTE- oder WiMAX-Funknetze werden beispielsweise auch bei so genannten Air-to-Ground-Netzen eingesetzt. In derartigen Netzen können z.B. sehr schnelle Datenverbindungen zwischen einer Mobileinheit (z.B. Funkmodem), welche sich beispielsweise in einem Flugzeug befindet, und Funkstationen bzw. Basisstationen am Boden aufgebaut werden. Über die Datenverbindungen können dann beispielsweise Flugzeugpassagieren Kommunikationsdienste an Bord des Flugzeugs angeboten werden. Im Gegensatz zu herkömmlichen Funkkommunikationssystemen (z.B. GSM, UMTS, etc.) sind bei so genannten Air-to-Ground-Netzen die Funkzellen größer und Air-to-Ground-Netze sind üblicherweise unsynchronisiert.

Bei den meisten unsynchronisierten Funkkommunikationssystemen wird ein Timing daher in der jeweiligen Funkstation bzw. in der zugehörigen Funkzelle kontrolliert. Zur Optimierung, insbesondere bei einer Verbindungsübergabe, dem so genannten Handover, bei welchem eine Sprache- und/oder Datenverbindung zwischen einer Mobileinheit und einer Funkzelle ohne Unterbrechung in eine andere, üblicherweise benachbarte Funkzelle übergeben wird, oder bei einer Verwendung eines Kontrollkanals werden Funkstationen benachbarter Funkzellen üblicherweise im Zeitbereich synchronisiert. Ohne eine derartige Synchronisation der Funkstationen würde es zu Interferenzen und Störungen zwischen den Funkstationen kommen und eine Verbindungsübergabe würde eine längere Zeitdauer in Anspruch nehmen, da sich z.B. eine Mobilstation beim Handover mit der neuen Funkstation zeitlich synchronisieren muss.

Bei unterschiedlichen Entfernungen verschiedener Mobileinheiten zu einer Funkstation in einem Funkkommunikationssystem weisen die Signale der Mobileinheiten unterschiedliche Signallaufzeiten auf. Die Signale der Mobileinheiten kommen damit zu unterschiedlichen Zeitpunkten zur Funkstation. Werden nun die gleichen Funkressourcen (z.B. Frequenzband, Zeitabschnitte, etc.) zu aufeinanderfolgenden Zeiten an die verschiedenen Mobileinheiten zugewiesen, so muss - bei unbekannten Signallaufzeiten - beispielsweise eine maximale Signallaufzeit als so genannte "Guard-Time" zwischen den Funkressourcen im Zeitbereich freigehalten werden. Um diese sehr lange Guard-Time zu vermeiden, werden üblicherweise die Sendezeitpunkte der Mobileinheiten derart synchronisiert, dass die jeweiligen Signale in der Funkstation zu gleichen relativen Zeitpunkten ankommen. Das wird üblicherweise dadurch erreicht, dass von den Mobileinheiten Signale um das so genannte Timing Advance früher gesendet werden. Bei einem Verbindungsaufbau zwischen einer Mobileinheit und einer Funkstation wird das so genannte Timing Advance bzw. die Signallaufzeit zwischen Mobileinheit und Funkstation gemessen. Dabei ist eine so genannte Extra-Guard-Time oder verlängertes Schutzintervall notwendig.

Bei sehr großen Entfernungen zwischen der Mobileinheit und der Funkstation wie z.B. bei Air-to-Ground-Netzen kann die Signallaufzeit sehr groß werden. Eine Messung der Signallaufzeit durch die Funkstation ist nicht mehr exakt möglich, weil die Signallaufzeit größer als die Extra-Sicherheitszeit ist. Von der Mobileinheit müssen daher bei einem Verbindungsaufbau zu einer Funkstation alle möglichen Signallaufzeiten durchprobiert werden. Dies führt dann zu einer Verzögerung beim Verbindungsaufbau. Insbesondere in Air-to-Ground-Netzen kann es dann aufgrund der hohen Fluggeschwindigkeit des Flugzeugs, in welchem sich eine Mobileinheit befindet, durch diese Verzögerung bei einer Verbindungsübergabe oder einem Handover von einer Funkstation auf eine andere Funkstation in einem unsynchronisierten Funkkommunikationssystem zu einer Unterbrechung der Verbindung kommen. D.h. die Verbindung wird unterbrochen, bevor eine Synchronisation der Mobileinheit mit der neuen Funkstation vorgenommen worden ist.

Eine Möglichkeit zur zeitlichen Synchronisation seitens der Funk- bzw. Basisstationen eines Funkkommunikationssystem ist beispielsweise ein Einsatz einer zentralen Einheit (z.B. GPS-Empfänger, Location Measurement Unit, etc.) oder es werden Synchronisationssignale zwischen den Funkstationen ausgetauscht. Dadurch werden allerdings Ressourcen belegt, welche dann für eine Funkübertragung z.B. von Sprach- und/oder Dateninformationen nicht mehr zur Verfügung stehen. Insbesondere bei Funkkommunikationssysteme auf Basis von OFDMÜbertragungsverfahren wie z.B. LTE-Netzen, WiMAX-Netzen, Air-to-Ground-Netzen, etc. ist aufgrund der hohen Datenraten für die damit zur Verfügung gestellten Kommunikationsdienste (z.B. Videoübertragung, etc.) eine rasche und genaue Synchronisation notwendig. Diese ist allerdings nur mit großem Aufwand und zusätzlicher Signalisierung zwischen den Funkstationen bzw. zwischen den Funkstationen und einer zentralen Einheit zu erzielen.

Aus der Schrift EP 1 566 901 A1 ist ebenfalls ein Verfahren zur Synchronisation eines Funkkommunikationssystems bekannt. Dabei wird zwar in einer Mobileinheit anhand von Signalen, welche von zumindest zwei Funkstationen des Funkkommunikationssystem ausgesendet werden, eine Zeitabweichung zwischen den empfangenen Signalen detektiert und dann ein Synchronisationswert ermittelt, welcher dann an eine der zumindest zwei Funkstationen zurückgesendet und von dieser Funkstation für die eigene zeitliche Synchronisation berücksichtigt wird. Dieses Verfahren weist allerdings den Nachteil auf, dass für eine Synchronisierung von benachbarten Funkstationen Synchronisationswert von zahlreichen Mobileinheiten notwendig sind, und eine Synchronisation zwischen benachbarten Funkstationen, welche für einen erfolgreichen Handover, insbesondere in Air-to-Ground-Netzen, notwendig ist, nicht erfolgt bzw. eine Abweichung des Timings benachbarter Funkstationen im Funkkommunikationssystem für Mobileinheiten nicht bekannt ist.

### Darstellung der Erfindung

Der Erfindung liegt daher die Aufgabe zugrunde, ein Verfahren zur zeitlichen Synchronisation in einem zellulären, unsynchronisierten Funkkommunikationssystem anzugeben, durch welches auf einfache Weise eine Synchronisation zwischen einer Mobileinheit und Funkstationen des Funkkommunikationssystem, insbesondere für eine Verbindungsübergabe, mit geringem Aufwand und rasch realisiert wird.

Diese Aufgabe wird ein Verfahren der eingangs angeführten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem von der ersten Funkstation eine erste Signallaufzeit für ein von der ersten Funkstation stammendes erstes Signal ermittelt wird. Die erste Signallaufzeit wird dann an die Mobileinheit übermittelt. Dann wird von der Mobileinheit eine Zeitdifferenz zwischen einem Empfang des von der ersten Funkstation stammenden ersten Signals und dem Empfang eines von einer zweiten Funkstation stammenden zweiten Signals gemessen. Weiterhin wird dann von der zweiten Funkstation eine zweite Signallaufzeit des zweiten Signals ermittelt und diese zweite Signallaufzeit an die Mobileinheit übermittelt. Von der Mobileinheit wird dann aus der gemessenen Zeitdifferenz zwischen dem Empfang des ersten und des zweiten Signals sowie der ersten und der zweiten Signallaufzeit ein Synchronisationsfehler ermittelt.

Der Hauptaspekt der erfindungsgemäß vorgeschlagenen Lösung besteht darin, dass ein Synchronisationsfehler zwischen den Funkstationen des Funkkommunikationssystems von einer Mobileinheit abgeschätzt bzw. ermittelt wird. Von der Mobileinheit wird eine Synchronisation mit zwei Funkstationen durchgeführt, von welchen die Mobileinheit Signale empfangen kann und dabei Werte für eine Ermittlung des Synchronisationsfehlers zwischen diesen Funkstationen bestimmt. Der Synchronisationsfehler, welcher dann z.B. von weiteren Mobileinheiten im Funkkommunikationssystem genutzt werden kann, wird dabei von der Mobileinheit sehr einfach und ohne großen Aufwand wie z.B. einer zusätzlichen zentralen Einheit im Funkkommunikationssystem bestimmt. Weiterhin werden bei der Ermittlung des Synchronisationsfehlers keinen zusätzlichen Ressourcen belegt. Das erfindungsgemäße Verfahren kann insbesondere auch in so genannten Air-to-Ground-Netzen sehr einfach angewendet werden.

Es kann auch vorteilhaft sein, wenn eine Messung der Zeitdifferenz zwischen einem Empfang des von der ersten Funkstation stammenden ersten Signals und dem Empfang des zweiten von der zweiten Funkstation stammenden Signals von der Mobileinheit erst nach der Erstsynchronisation mit der zweiten Funkstation durchgeführt wird. Damit kann die Mobileinheit ebenfalls sehr einfach eine Zeitdifferenz zwischen dem Empfang eines ersten Signals von der ersten Funkstation und eines zweiten Signals von der zweiten Funkstation bestimmen.

Idealer Weise wird die Erstsynchronisation von der Mobileinheit während einer Verbindungsübergabe von der ersten auf die zweite Funkstation durchgeführt. Während der Erstsynchronisation mit der zweiten Funkstation - z.B. bei einem Handover - ist es günstig, wenn von der Mobileinheit eine Schätzung für den Synchronisationsfehler zwischen den Funkstationen durchgeführt wird.

Bei einem Verbindungsaufbau wird die Mobileinheit z.B. mit der ersten Funkstation nach einem so genannten "Try-andError"-Verfahren synchronisiert und eventuelle Änderungen der ersten Signallaufzeit regelmäßig gemessen. Die erste Signallaufzeit wird an die Mobileinheit signalisiert und ist damit der Mobileinheit bekannt. Vor der Verbindungsübergabe bzw. einem Handover an die zweite Funkstation kann dann die Differenz zwischen dem jeweiligen Empfang der Signale von den jeweiligen Funkstationen gemessen werden. Bei einem Empfang des zweiten Signals der zweiten Funkstation wird dann die Mobileinheit nach dem "Try-and-Error"-Verfahren auf die zweite Funkstation synchronisiert. Nach der erfolgten Verbindungsübergabe kann dann die zweite Signallaufzeit exakt von der zweiten Funkstation gemessen und an die Mobileinheit übermittelt werden. Damit liegen der Mobileinheit auf sehr einfache Weise exakte Werte für eine Ermittlung des Synchronisationsfehlers vor.

Weiterhin ist es günstig, wenn der von der Mobileinheit ermittelte Synchronisationsfehler zwischen der ersten und der zweiten Funkstation im Funkkommunikationssystem z.B. für weitere im Funkkommunikationssystem vorhandene Mobileinheiten zur Verfügung gestellt wird. Damit kann auf sehr einfache Weise der ermittelte Synchronisationsfehler zwischen der ersten und der zweiten Funkstation von allen anderen im Funkkommunikationssystem vorhandenen Mobileinheiten genutzt werden. Von diesen Mobileinheiten kann dann z.B. ein Handover von der ersten auf die zweite Funkstation sehr rasch und ohne große zeitliche Verzögerung oder Erstsynchronisation vorgenommen werden. Von den anderen Mobileinheiten im Funkkommunikationssystem kann der ermittelte Synchronisationsfehler dann z.B. für eine Berechnung des Timing-Unterschieds der beiden Funkstationen für eine Verbindungsübergabe genutzt werden. Es ist dann nicht mehr notwendig, beispielsweise alle möglichen Synchronisationsfehler und/oder Timing Unterschiede zwischen der ersten und der zweiten Funkstationen durchzuprobieren. Weiteren im Funkkommunikationssystem befindliche Mobileinheiten ist damit der Synchronisationsfehler bekannt und es kann von ihnen z.B. bei einem Handover die zweite Signallaufzeit oder das Timing Advance zur zweiten Funkstation unter Berücksichtigung dieses Synchronisationsfehlers aus der ersten Signallaufzeit zur ersten Funkstation und der Zeitdifferenz der Empfangszeitpunkte der jeweiligen Signale der Funkstationen ermittelt werden. Damit wird idealer Weise eine Unterbrechung bei der Verbindungsübergabe zwischen der ersten und zweiten Funkstation minimal.

Der von der Mobileinheit ermittelte Synchronisationsfehler kann dabei beispielsweise an eine der Funkstationen oder an beide Funkstationen übertragen werden. Von den Funkstationen kann dann der ermittelte Synchronisationsfehler den anderen Mobileinheiten zur Verfügung gestellt werden - z.B. mit einem Signal in Abwärtsrichtung beim so genannten Downlink. Es ist aber auch möglich, dass der ermittelte Synchronisationsfehler zentral im Funkkommunikationssystem hinterlegt und auf diese Weise den anderen Mobileinheiten verfügbar gemacht wird. Idealer Weise kann der von der Mobileinheit ermittelte Synchronisationsfehler mittels so genannter Remote OAM-Funktion oder Remote Operations, Administration and Maintenance-Funktion übermittelt werden. Mittels der Remote OAM-Funktion kann z.B. sehr einfach bei Air-to-Ground-Netzen am Boden eine Verfügbarkeit von Mobileinheiten im Air-to-Ground-Netz insbesondere über die so genannte Heartbeat-Signalisierung geprüft werden. So genannte Heartbeat-Signale sind Kontrollsignale, von welchen eine Verfügbarkeit von z.B. Mobileinheiten und/oder Übertragungsstrecken überwacht wird. Damit kann sehr einfach geprüft werden, welche Mobileinheiten über den ermittelten Synchronisationsfehler zu informieren sind bzw. an welchen Mobileinheiten der Synchronisationsfehler übermittelt werden muss.

Weiterhin ist es auch vorteilhaft, wenn der von der Mobilstation ermittelte Synchronisationsfehler im Funkkommunikationssystem mittels so genannter Broadcast-Signal oder mittels so genannter Unicast-Signalisierung für andere Mobilstationen zur Verfügung gestellt wird. Ein Broadcast-Signal stellt dabei ein Datensignal dar, welches sehr einfach von einem Punkt in einem Funkkommunikationssystem - z.B. der Mobilstation - an alle anderen Teilnehmer in diesem Funkkommunikationssystem (z.B. weitere Mobilstationen, etc.) übertragen werden kann. Damit können die weiteren Mobilstationen im Funkkommunikationssystem auf sehr einfache und effiziente Weise über den ermittelten Synchronisationsfehler informiert werden.

Alternativ kann die so genannte Unicast-Signalisierung eingesetzt werden. Dabei wird ein Datensignal oder eine Nachricht zwischen einem Sender - z.B. der Mobilstation - und einem einzigen Empfänger übertragen. Als Empfänger kann z.B. die erste oder zweite Funkstation verwendet werden, um dort eine Information über den ermittelten Synchronisationsfehler zu hinterlegen. Von der ersten bzw. zweiten Funkstation aus kann dann der ermittelte Synchronisationsfehler an andere Mobileinheiten im Funkkommunikationssystem, wenn von diesen beispielsweise eine Verbindung zur ersten oder zweiten Funkstation aufgebaut wird, übertragen werden, oder anderen Funkstationen im Funkkommunikationssystem zur Verfügung gestellt werden. Von diesen anderen Funkstationen kann die Information über den ermittelten Synchronisationsfehler dann ebenfalls sehr einfach an die anderen Mobilstationen im Funkkommunikationssystem weitergeleitet werden. Alternativ kann als Empfänger für die Unicast-Signalisierung auch ein Server im Funkkommunikationssystem vorgesehen sein, über welchen dann beispielsweise die anderen Mobileinheiten mit der Information über den Synchronisationsfehler versorgt werden.

In vorteilhafter Weise kann der ermittelte Synchronisationsfehler auch für eine Berechnung des so genannten Timing Advance der Mobileinheit verwendet werden. Das so genannte Timing Advance ist ein Wert, welcher in einem Funkkommunikationssystem (z.B. GSM, LTE, etc.) für eine Synchronisation zwischen dem so genannten Uplink und dem so genannten Downlink verwendet wird. Der Timing Advance-Wert gibt eine Zeitverschiebung bzw. einen Zeitversatz an, um welchen von einer Mobileinheit früher gesendet werden muss, damit unter Berücksichtigung der Signallaufzeit zwischen Mobileinheit und Basisstation das Signal in einem richtigen Zeitfenster an der Basisstation ankommt, damit sich dieses Signal nicht mit anderen Signalen überschneidet. Durch den ermittelten Synchronisationsfehler kann in der Mobileinheit der Timing-Advance-Wert zumindest abgeschätzt bzw. berechnet und damit sehr einfach eine Signallaufzeit zwischen Mobileinheit und den Funkstationen zumindest teilweise kompensiert werden.

Eine bevorzugte Ausgestaltung des erfindungsgemäßen Verfahrens sieht vor, dass als erstes Signal und als zweites Signal ein individuell der jeweiligen Funkstation zugeordnetes Pilotsignal verwendet wird, welches in einer Abwärtsrichtung beim so genannten Downlink von der jeweiligen Funkstation zur Mobileinheit signalisiert wird. Ein Pilotsignal ist in der Telekommunikation ein Signal - üblicherweise eine einzelne Frequenz, welches außerhalb und unabhängig von einem eigentlichen Nutzsignal (z.B. für eine Datenübertragung, Sprachübertragung, etc.) über einen Kommunikationskanal übertragen wird. Es wird insbesondere für Kontroll-, Steuerungs-, Referenz- und/oder Überwachungszwecke eingesetzt. Ein Pilotsignal kann z.B. der jeweils aussendenden Funkstation zugeordnet werden. Dadurch ist der Mobileinheit bekannt, welches Pilotsignal von welcher Funkstation übermittelt worden ist. Es kann daher auf Basis der Pilotsignale von der Mobileinheit nach erfolgter Erstsynchronisation mit der ersten und der zweiten Funkstation sehr einfach festgestellt werden, zu welchem Zeitpunkt von welcher Funkstation ein (Pilot-)Signal empfangen worden ist, und damit eine Zeitdifferenz zwischen einem Eintreffen dieser Signale gemessen werden.

Es empfiehlt sich auch, dass die erste wie die zweite Signallaufzeit auf Basis eines so genannten Random-Access Channel-Mechanismus bestimmt wird. Der so genannte Random-Access Channel-Mechanismus wird von Mobileinheiten in einem Funkkommunikationssystem genutzt, um eine Funkstation gezielt anzusprechen. Der Random-Access Channel ist dabei ein administrativer Kanal der Funkschnittstelle in einem Funkkommunikationssystem, über welchen von einer Mobileinheit in einem wahlfreien Zugriff, z.B. der Erstsynchronisation oder z.B. bei einer Verbindungsübergabe bzw. bei einem Handover ihren Verbindungswunsch in Form so genannter Random-Access Bursts signalisiert wird. Durch ein Antwort-Signal wird dann von der jeweiligen Funkstation ein Akzeptieren des Verbindungswunsches an die Mobileinheit bestätigt. Daher kann der Random-Access Channel-Mechanismus sehr einfach für eine Bestimmung der Signallaufzeiten des ersten Signals von der ersten Funkstation und des zweiten Signals von der zweiten Funkstation genutzt werden.

Eine bevorzugte Weiterentwicklung der Erfindung sieht vor, dass als zelluläres Funksystem ein Funkkommunikationssystem nach einem so genannten Time-Division-Duplex- oder TDD-Verfahren oder ein Funkkommunikationssystem nach einem so genannten Frequency-Division-Duplex- oder FDD-Verfahren eingesetzt wird. Bei einem TDD- oder Zeitduplex-Verfahren, welches z.B. im Mobilfunk eingesetzt wird, wird für einen Sende- und einen Empfangskanal die gleiche Frequenz genutzt und die Kanäle sind dabei zeitlich voneinander getrennt. Bei einem FDDoder Frequenzduplex-Verfahren, welches beispielsweise bei Mobilfunknetz nach dem GSM- oder dem UMTS-Standard zum Einsatz kommen kann, wird eine Information für jede Richtung mit Hilfe einer anderen Trägerfrequenz übertragen. Damit kann von einem Gerät gleichzeitig gesendet und empfangen werden.

Es ist günstig, wenn als zelluläres Funkkommunikationssystem ein Funkkommunikationssystem nach dem so genannten Long Term Evolution oder LTE-Standard oder nach dem Worldwide Interoperability for Microwave Access- oder WiMAX-Standard verwendet wird. Funksysteme nach dem so genannten Long Term Evolution oder LTE-Standard oder nach dem Worldwide Interoperability for Microwave Access- oder WiMAX-Standard werden beispielsweise für einen Einsatz in so genannten Air-to-Ground-Netzen verwendet. Über diese Air-to-Ground-Netze werden schnelle Datenverbindungen zwischen einer oder mehreren Mobileinheiten in einem Flugzeug und Funkstationen bzw. Basisstationen am Boden oder die durch diese Funkstationen gebildeten Funkzellen hergestellt. Funkkommunikationssysteme nach diesen Standards - LTE bzw. WiMAX - basieren auf einem OFDM-Verfahren für eine Signalübertragung. Bei OFDM wird ein breites Frequenzband in eine Anzahl von Subbändern aufgeteilt, auf welchen die Daten übertragen werden. Einer Mobileinheit kann eine Teilmenge oder alle Subbänder zur Kommunikation zugewiesen werden. Die Trägerfrequenzen zur digitalen Daten- bzw. Signalübertragung sind bei OFDM orthogonal zueinander angeordnet. Dadurch wird ein Übersprechen zwischen den Signalen, die auf benachbarte Trägerfrequenzen reduziert und es können insbesondere Datendienst mit einer hohen Übertragungsrate (z.B. mobiles Internet, etc.) kostengünstig angeboten werden.

### Kurzbeschreibung der Zeichnung

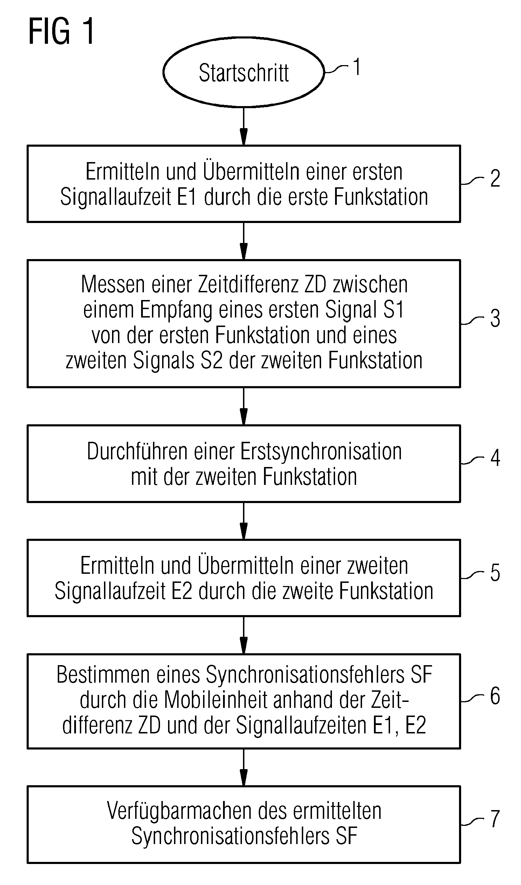

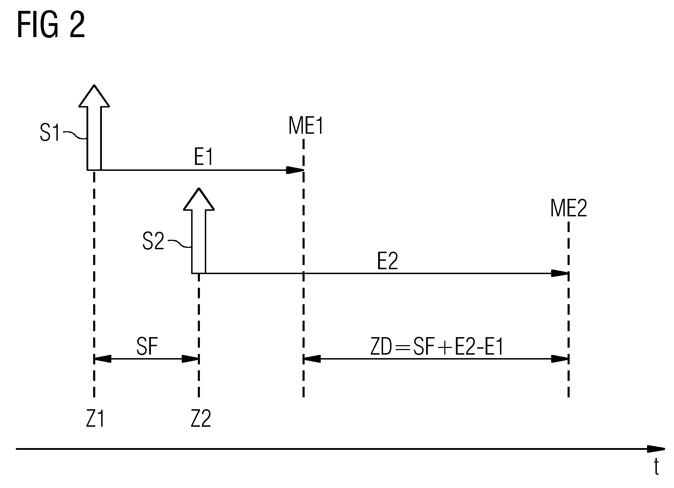

Die Erfindung wird nachfolgend in beispielhafter Weise anhand der beigefügten Figuren erläutert. Es zeigt Figur 1, einen beispielhaften Ablauf des erfindungsgemäßen Verfahrens zur zeitlichen Synchronisation zwischen einer ersten und einer zweiten Funkstationen und einer Mobileinheit in einem zellulären, unsynchronisierten Funkkommunikationssystem. Figur 2 zeigt beispielhaft und schematisch einen zeitlichen Verlauf und Zusammenhang zwischen von den jeweiligen Funkstationen stammenden Signalen und einem ermittelten Synchronisationsfehler.

### Ausführung der Erfindung

Figur 1 zeigt in schematischer und beispielhafter Weise einen Ablauf des erfindungsgemäßen Verfahrens zur zeitlichen Synchronisation einer beispielhaften ersten und einer beispielhaften zweiten Funkstation, insbesondere Basisstation in einem zellulären, unsynchronisierten Funkkommunikationssystem wie z.B. einem Mobilfunknetz auf Basis des LTE-Standards oder auf Basis von WiMAX oder eines so genannten Air-to-Ground-Netzes. Das Funkkommunikationssystem umfasst dabei zumindest eine Mobileinheit wie z.B. ein Teilnehmerendgerät (z.B. Smartphone, Tablet-PC, etc.) oder ein Funkmodem, welches sich beispielsweise bei einem Air-to-Ground-Netz in einem Flugzeug befindet oder auch z.B. in einem sich mit hoher Geschwindigkeit bewegenden Beförderungsmittel (z.B. Hochgeschwindigkeitszug) angebracht sein kann.

Von der Mobileinheit kann zur ersten wie auch zur zweiten Funkstation eine direkte Verbindung z.B. für eine Übertragung von Sprach- und/oder Dateninformation aufgebaut werden. In einem unsynchronisierten Funkkommunikationssystem ist zusätzlich zu beachten, dass die beispielhaften Funkstationen ihr eigenes individuelles Timing aufweisen. D.h. Signale werden von den Funkstationen beispielsweise unabhängig voneinander gesendet.

Das erfindungsgemäße Verfahren beginnt mit einem Startschritt 1. Bei diesem Startschritt 1 des erfindungsgemäßen Verfahrens ist zwischen der Mobileinheit und der ersten Funkstation eine Verbindung aufgebaut und die Mobileinheit mit der ersten Funkstation synchronisiert. Dabei wird wie in einem zweiten Verfahrensschritt 2 von der ersten Funkstation regelmäßig für ein Feststellen eventueller Änderungen eine erste Signallaufzeit E1 eines ersten Signals S1 ermittelt und dann and die Mobileinheit übertragen.

Für die Bestimmung der ersten Signallaufzeit E1 von der ersten Funkstation kann der so genannte Random-Access Channel-Mechanismus verwendet werden, welcher von Mobileinheiten in einem Funkkommunikationssystem beispielweise zum gezielten Ansprechen von Funkstationen genutzt wird. Der Random-Access Channel ist dabei ein administrativer Kanal der Funkschnittstelle, über welchen von der Mobileinheit in einem wahlfreien Zugriff, z.B. bei der Erstsynchronisation, etc. ihren Verbindungswunsch in Form so genannter Random-Access Burst oder RACH-Signal signalisiert wird. Durch ein Antwort-Signal (z.B. RACH-Acknowledge) wird dann von der jeweiligen Funkstation ein Akzeptieren des Verbindungswunsches an die Mobileinheit bestätigt.

Daher kann der Random-Access Channel-Mechanismus sehr einfach für eine Bestimmung der Signallaufzeit des ersten Signals von der ersten Funkstation genutzt werden. Von der ersten Funkstation wird z.B. im zweiten Verfahrensschritt 2 das erste Signal S1 zum ersten Zeitpunkt Z1 versendet. Nach dem Empfang ME1 des ersten Signals S1 werden von der Mobileinheit jeweils entsprechende RACH-Signale an die erste Funkstation übermittelt. Die erste Funkstation kann dann im zweiten Verfahrensschritt 2 nach Erhalt eines ersten RACH-Signals von der Mobileinheit eine erste Signallaufzeit E1 bestimmen. Über ein so genanntes RACH-Acknowledge als Antwortsignal auf das erste RACH-Signal der Mobileinheit wird dann von der ersten Funkstation die erste Signallaufzeit E1 an die Mobileinheit übermittelt.

Wird die Mobileinheit beispielsweise aus einem Versorgungsgebiet der ersten Funkstation bzw. einer zugehörigen Funkzelle hinausbewegt, so ist es notwendig, dass die Verbindung an z.B. die zweite Funkstation bzw. der zugehörigen Funkzelle, welche zur ersten Funkstation bzw. deren Funkzelle benachbart ist, übergeben werden muss, um die Verbindung aufrecht zu erhalten. So wird in einem dritten Verfahrensschritt 3 von der Mobileinheit eine Zeitdifferenz ZD zwischen einem Empfang ME1 des ersten Signals S1, welches von der ersten Funkstation in Abwärtsrichtung bzw. im so genannten Downlink an die Mobileinheit zu einen Zeitpunkt Z1 gesendet wird, und einem Empfang ME2 eines zweiten Signals S2, welches von der zweiten Funkstation ebenfalls in Abwärtsrichtung bzw. im Downlink zur Mobileinheit zu einem zweiten Zeitpunkt Z2 übermittelt wird, gemessen.

Als erstes Signal S1 bzw. als zweites Signal S2 können dabei z.B. die so genannten Pilotsignale der ersten bzw. der zweiten Funkstation verwendet werden. Ein Pilotsignal S1, S2 wird von der Funkstation in Abwärtsrichtung bzw. beim Downlink signalisiert und wird insbesondere für Kontroll-, Steuerungs, Referenz- und/oder Überwachungszwecke eingesetzt. Die Pilotsignale S1, S2 werden außerdem außerhalb und unabhängig von einem eigentlichen Nutzsignal (z.B. für eine Datenübertragung, Sprachübertragung, etc.) über einen Kommunikationskanal übertragen, sind aber der jeweils sendenden Funkstation eindeutig zugeordnet. Dadurch kann die Mobileinheit eindeutig feststellen, zu welchem Empfangszeitpunkt EM1, EM2 von welcher Funkstation das jeweilige Signal S1, S2 empfangen worden ist.

Für einen Aufbau einer Verbindung mit der zweiten Funkstation wird in einem vierten Verfahrensschritt 4 zwischen der Mobileinheit und der zweiten Funkstation eine Erstsynchronisation durchgeführt. Dabei wird die Mobileinheit beispielsweise mittels "Try-and-Error" mit der zweiten Funkstation synchronisiert. D.h. es werden von der Mobileinheit möglichen zweite Signallaufzeiten E2 bzw. mögliche Synchronisationsfehler SF für einen Verbindung mit der zweiten Funkstation abgeschätzt und durchprobiert, bis eine Verbindung mit der zweiten Funkstation aufgebaut werden kann und eine erfolgreiche Verbindungsübergabe möglich ist. Dabei ist es alternativ auch möglich, dass die Messung der Zeitdifferenz ZD alternativ auch nach der Erstsynchronisation zwischen der Mobileinheit und der zweiten Funkstation durchgeführt wird.

Dann wird in einem fünften Verfahrensschritt 5 von der zweiten Funkstation eine zweite Signallaufzeit E2 des zweiten Signals S2 ermittelt. Die Signallaufzeit E2 wird dabei von der zweiten Funkstation beim so genannten Uplink - d.h. beim Senden eines Signals S2 von der Mobileinheit zur zweiten Funkstation - gemessen. Für die Bestimmung der zweiten Signallaufzeit E2 im fünften Verfahrensschritt 5 kann beispielsweise genauso wie für eine Ermittlung der ersten Signallaufzeit E1 von der ersten Funkstation im zweiten Verfahrensschritt 2 der so genannte Random-Access Channel-Mechanismus verwendet werden.

D.h. von der zweiten Funkstation wird das zweite Signal S2 ausgesendet. Nach dem Empfang ME2 des zweiten Signals S2 wird von der Mobileinheit ein entsprechendes RACH-Signal an die zweite Funkstation übermittelt. Von der zweiten Funkstation wird dann im fünften Verfahrensschritt 5 nach Erhalt dieses RACH-Signals eine zweite Signallaufzeit E2 ermittelt. Dann wird von der zweiten Funkstation beispielsweise mittels eines so genannten RACH-Acknowledge als Antwort auf das zweite RACH-Signal die zweite Signallaufzeit E2 an die Mobileinheit übermittelt.

Im sechsten Verfahrensschritt 6 wird dann von der Mobileinheit anhand der gemessenen Zeitdifferenz ZD zwischen den Empfangszeitpunkten EM1, EM2 des ersten Signals S1 und des zweiten Signals S2 sowie der ersten Signallaufzeit E1 und der zweiten Signallaufzeit S2 der zeitliche Synchronisationsfehler SF zwischen der ersten und der zweiten Funkstation bestimmt.

In einem siebenten Verfahrensschritt 7 kann dann der von der Mobileinheit bestimmte Synchronisationsfehler SF zwischen der ersten und der zweiten Funkstation beispielsweise für anderen Mobileinheiten im Funkkommunikationssystem verfügbar gemacht werden. Der Synchronisationsfehler SF kann dazu beispielsweise in der ersten und zweiten Funkstation hinterlegt werden, sodass er von anderen Mobilstationen bei einer Verbindungsübergabe zwischen erster und zweiter Funkstation genutzt werden kann. Alternativ kann der Synchronisationsfehler SF z.B. auch zentral im Funkkommunikationssystem beispielsweise in einem zentralen Wartungszentrum gespeichert werden und dann von dort an andere Mobileinheiten im Funkkommunikationssystem übertragen werden. Dazu kann beispielsweise das so genannte Remote Operations, Administration and Maintenance bzw. Remote OAM genutzt werden. Über eine Remote OAM kann beispielsweise sehr einfach eine Verfügbarkeit weiterer Mobileinheiten im Funkkommunikationssystem z.B. über eine so genannte Heartbeat-Signalisierung geprüft und den Mobileinheiten dann der für die erste und zweite Funkstation ermittelte Synchronisationsfehler SF übermittelt werden. Für diese Mobileinheiten kann dann ohne zeitaufwendige Abschätzung des Synchronisationsfehlers SF und ohne großen Aufwand beispielsweise eine Verbindungsübergabe zwischen der ersten und der zweiten Funkstation durchgeführt werden.

Weiterhin kann für eine Übermittlung des Synchronisationsfehlers SF an andere Mobilstationen im siebenten Verfahrensschritt 7 ein so genanntes Broadcast-Signal oder eine so genannte Unicast-Signalisierung genutzt werden. Mittels des Broadcast-Signals kann der ermittelte Synchronisationsfehler SF auf einfache Weise an andere im Funkkommunikationssystem befindliche Mobileinheiten versendet werden. Mittels Unicast-Signalisierung kann der ermittelte Synchronisierungsfehler SF von der Mobilstation gezielt an eine Funkstation oder an einen Server im Funkkommunikationssystem weitergeleitet werden, um dann von dort im Funkkommunikationssystem an weitere Funkstationen und/oder weitere Mobileinheiten verteilt zu werden. Weiterhin kann der ermittelte Synchronisationsfehler SF von der Mobileinheit bzw. gegebenenfalls auch von den anderen Mobileinheiten im Funkkommunikationssystem für eine Berechnung des so genannten Timing Advance benutzt werden.

In Figur 2 wird eine detaillierte Erläuterung eines Zusammenhangs zwischen von den von der ersten bzw. zweiten Funkstation stammenden Signalen S1, S2, einer Bestimmung der Zeitdifferenz ZD sowie der jeweiligen Signallaufzeiten E1, E2 und einer daraus erfolgenden Ableitung des Synchronisationsfehler SF beispielhaft anhand eines schematisch dargestellten zeitlichen Verlaufs beschrieben. Dieser zeitliche Verlauf ist in Figur 2 als Ablauf entlang der Zeit t von links nach rechts dargestellt.

Zu einem ersten Zeitpunkt Z1 wird von der ersten Funkstation ein erstes Signal S1 versendet. Zu einem späteren, zweiten Zeitpunkt Z2 wird von der zweiten Funkstation ein zweites Signal S2 ausgesendet. Beide Signale S1, S2 können beispielsweise der Mobileinheit bekannte Pilotsignale der jeweiligen Funkstation sein. Bei der Differenz SF der beiden Zeitpunkte Z1 und Z2 handelt es sich um den zeitlichen Synchronisationsfehler SF, um welchen die beiden Funkstationen im Zeitbereich nicht synchron sind. Das bedeutet, dass beispielsweise gemäß funkstationsinternen Uhren bzw. einem funkstationsinternem Timing unabhängig voneinander versendet werden.

In der Mobileinheit wird nach einer ersten Signallaufzeit E1 ein Empfang ME1 des ersten Signals S1 festgestellt. Von der Mobileinheit wird dann begonnen, eine Zeitdifferenz ZD bis zum Empfang ME2 des zweiten Signals S2 zu messen, wobei das zweite Signal S2 nach einer zweiten Signallaufzeit E2 gemessen vom zweiten Zeitpunkt Z2 bei der Mobileinheit eintrifft.

Sobald von der Mobileinheit der Empfang ME1 des ersten Signals S1 festgestellt wird, wird von der Mobileinheit beispielsweise eine erste Antwortnachricht wie z.B. ein RACH-Signal an die erste Funkstation gesendet. Von der ersten Funkstation kann dann nach Erhalte der ersten Antwortnachricht auf das ausgesendete erste Signal S1 eine erste Signallaufzeit E1 bestimmt werden. Diese erste Signallaufzeit E1 wird dann z.B. mit einem Antwort-Signal wie z.B. einem RACH-Acknowledge auf die erste Antwortnachricht der Mobileinheit an die Mobileinheit übermittelt.

Nach dem Empfang ME2 des zweiten Signals S2 wird von der Mobileinheit ebenfalls eine zweite Antwortnachricht auf das zweite Signal S2 (z.B. RACH-Signal) an die zweite Funkstation übermittelt. Die zweite Funkstation bestimmt daraus dann die zweite Signallaufzeit E2 und kann diese dann z.B. mittels eines Antwort-Signals auf diese zweite Antwortnachricht der Mobileinheit zur Verfügung stellen.

Da die von der Mobileinheit gemessene Zeitdifferenz ZD von den beiden Signallaufzeiten E1 und E2 sowie dem Synchronisationsfehler SF zwischen den beiden Funkstationen abhängt, kann dann von der Mobileinheit bei Kenntnis der Zeitdifferenz ZD und der beiden Signallaufzeiten E1 und E2 der Synchronisationsfehler SF bestimmt werden. Diese Bestimmung wird bei einer erfolgreichen Erstsynchronisation der Mobileinheit mit der ersten und der zweiten Funkstation bzw. bei einer erfolgreichen Verbindungsübergabe/Handover durchgeführt, da während der Erstsynchronisation bzw. bei der Verbindungsübergabe eine Verbindung zu beiden Funkstationen besteht und damit alle für die Bestimmung des Synchronisationsfehlers SF notwendigen Werte wie Zeitdifferenz ZD und die beiden Signallaufzeiten E1 und E2 bekannt sind.

## Patentansprüche

1. Verfahren zur zeitlichen Synchronisation einer ersten und einer zweiten Funkstation in einem zellulären, unsynchronisierten Funkkommunikationssystem, wobei das Funkkommunikationssystem weiterhin zumindest eine Mobileinheit umfasst, und wobei zwischen der zumindest einen Mobileinheit und der ersten Funkstation eine Verbindung aufgebaut ist, **dadurch gekennzeichnet, dass** eine erste Signallaufzeit (E1) eines von der ersten Funkstation stammenden ersten Signals (S1) von der ersten Funkstation ermittelt und an die Mobileinheit übertragen wird (2), dass dann von der Mobileinheit eine Zeitdifferenz (ZD) zwischen einem Empfang (ME1) des von der ersten Funkstation stammenden ersten Signals (S1) und dem Empfang (ME2) eines zweiten von der zweiten Funkstation stammenden Signals (S2) gemessen wird (3), dass dann eine Erstsynchronisation mit der zweiten Funkstation durchgeführt wird (4), dass dann von der zweiten Funkstation eine zweite Signallaufzeit (E2) des zweiten Signals (S2) ermittelt und an die Mobileinheit übermittelt wird (5), und dass dann von der Mobileinheit aus der gemessenen Zeitdifferenz (ZD) zwischen dem Empfang (ME1, ME2) des ersten und zweiten Signals (S1, S2), der ersten Signallaufzeit (E1) und der zweiten Signallaufzeit (E2) ein Synchronisationsfehler (SF) ermittelt wird (6).

2. Verfahren nach Anspruch 1, **dadurch gekennzeichnet, dass** eine Messung der Zeitdifferenz (ZD) zwischen einem Empfang (ME1) des von der ersten Funkstation stammenden ersten Signals (S1) und dem Empfang (ME2) des zweiten von der zweiten Funkstation stammenden Signals (S2) von der Mobileinheit erst nach der Erstsynchronisation der Mobileinheit mit der zweiten Funkstation durchgeführt wird.

3. Verfahren nach einem der Ansprüche 1 bis 2, **dadurch gekennzeichnet, dass** die Erstsynchronisation von der Mobileinheit während einer Verbindungsübergabe von der ersten auf die zweite Funkstation durchgeführt wird (4).

4. Verfahren nach einem der Ansprüche 1 bis 3, **dadurch gekennzeichnet, dass** bei der Erstsynchronisation der Mobileinheit mit der zweiten Funkstation von der Mobileinheit eine Schätzung für den Synchronisationsfehler (SF) zwischen den Funkstationen durchgeführt wird (4).

5. Verfahren nach einem der Ansprüche 1 bis 4, **dadurch gekennzeichnet, dass** der von der Mobileinheit ermittelte Synchronisationsfehler (SF) im Funkkommunikationssystem für weitere Mobileinheiten zur Verfügung gestellt wird (7).

6. Verfahren nach einem der Ansprüche 1 bis 5, **dadurch gekennzeichnet, dass** der von der Mobileinheit ermittelte Synchronisationsfehler (SF) im Funkkommunikationssystem mittels so genanntem Remote Operations, Administration and Maintenance (OAM) übermittelt wird (7).

7. Verfahren nach einem der Ansprüche 1 bis 5, **dadurch gekennzeichnet, dass** der von der Mobileinheit ermittelte Synchronisationsfehler (SF) im Funkkommunikationssystem mittels so genannter Broadcast-Signale übertragen wird.

8. Verfahren nach einem der Ansprüche 1 bis 5, **dadurch gekennzeichnet, dass** der von der Mobileinheit ermittelte Synchronisationsfehler (SF) im Funkkommunikationssystem mittels so genannter Unicast-Signalisierung übertragen wird.

9. Verfahren nach einem der Ansprüche 1 bis 8, **dadurch gekennzeichnet, dass** der ermittelte Synchronisationsfehler (SF) für eine Berechnung des so genannten Timing Advance der Mobileinheit verwendet wird.

10. Verfahren nach einem der Ansprüche 1 bis 9, **dadurch gekennzeichnet, dass** als erstes Signal (S1) und als zweites Signal (S2) ein individuell der jeweiligen Funkstation zugeordnetes Pilotsignal verwendet wird, welches in einer Abwärtsrichtung von der jeweiligen Funkstation zur Mobileinheit signalisiert wird (3).

11. Verfahren nach einem der Ansprüche 1 bis 10, **dadurch gekennzeichnet, dass** die erste wie zweite Signallaufzeit (E1, E2) auf Basis eines so genannten Random-access channel-Mechanismus bestimmt wird (4).

12. Verfahren nach einem der Ansprüche 1 bis 11, **dadurch gekennzeichnet, dass** als zelluläres Funkkommunikationssystem ein Funkkommunikationssystem nach einem so genannten Time-Division-Duplex-Verfahren oder ein Funkkommunikationssystem nach einem so genannten Frequency-Division-Duplex-Verfahren eingesetzt wird.

13. Verfahren nach einem der Ansprüche 1 bis 12, **dadurch gekennzeichnet, dass** als zelluläres Funkkommunikationssystem ein Funkkommunikationssystem nach dem so genannten Long Term Evolution oder LTE-Standard oder nach dem Worldwide Interoperability for Microwave Access- oder WiMAX-Standard verwendet wird.

## Claims

1. Method for the temporal synchronisation of a first and a second radio station in a cellular, non-synchronised radio communication system, wherein the radio communication system further comprises at least one mobile unit, and wherein a connection is established between the at least one mobile unit and the first radio station, **characterised in that** a first signal propagation time (E1) of a first signal (S1) originating from the first radio station is determined by the first radio station and transmitted (2) to the mobile unit, that then a time difference (ZD) is measured (3) by the mobile unit between a reception (ME1) of the first signal (S1) originating from the first radio station and the reception (ME2) of a second signal (S2) originating from the second radio station, that then an initial synchronisation with the second radio station is performed (4), that then a second signal propagation time (E2) of the second signal (S2) is determined by the second radio station and is transmitted (5) to the mobile unit, and that then a synchronisation error (SF) is determined (6) by the mobile unit from the measured time difference (ZD) between the reception (ME1, ME2) of the first and second signal (S1, S2), the first signal propagation time (E1) and the second signal propagation time (E2).

2. Method according to claim 1, **characterised in that** a measurement of the time difference (ZD) between a reception (ME1) of the first signal (S1) originating from the first radio station and the reception (ME2) of the second signal (S2) originating from the second radio station is not performed by the mobile unit until after the initial synchronisation of the mobile unit with the second radio station.

3. Method according to one of claims 1 to 2, **characterised in that** the initial synchronisation is performed (4) by the mobile unit during a handover from the first to the second radio station.

4. Method according to one of claims 1 to 3, **characterised in that** during the initial synchronisation of the mobile unit with the second radio station an estimate of the synchronisation error (SF) between the radio stations is performed (4) by the mobile unit.

5. Method according to one of claims 1 to 4, **characterised in that** the synchronisation error (SF) determined by the mobile unit is made available (7) in the radio communication system for further mobile units.

6. Method according to one of claims 1 to 5, **characterised in that** the synchronisation error (SF) determined by the mobile unit is transmitted (7) in the radio communication system using so-called Remote Operations, Administration and Maintenance (OAM).

7. Method according to one of claims 1 to 5, **characterised in that** the synchronisation error (SF) determined by the mobile unit is transmitted in the radio communication system using so-called broadcast signals.

8. Method according to one of claims 1 to 5, **characterised in that** the synchronisation error (SF) determined by the mobile unit is transmitted in the radio communication system using so-called unicast signalling.

9. Method according to one of claims 1 to 8, **characterised in that** the determined synchronisation error (SF) is used for a calculation of the so-called timing advance of the mobile unit.

10. Method according to one of claims 1 to 9, **characterised in that** a pilot signal individually assigned to the respective radio station is used as a first signal (S1) and as a second signal (S2), and is signalled (3) in a downward direction from the respective radio station to the mobile unit.

11. Method according to one of claims 1 to 10, **characterised in that** the first as well as the second signal propagation time (E1, E2) is determined (4) on the basis of a so-called random access channel mechanism.

12. Method according to one of claims 1 to 11, **characterised in that** a radio communication system is used as a cellular radio communication system in accordance with a so-called time division duplex method, or a radio communication system is used in accordance with a so-called frequency division duplex method.

13. Method according to one of claims 1 to 12, **characterised in that** a radio communication system is used as a cellular radio communication system in accordance with the so-called Long Term Evolution or LTE standard or in accordance with the Worldwide Interoperability for Microwave Access or WiMAX standard.

## Revendications

1. Procédé de synchronisation temporelle entre une première et une deuxième station radio dans un système de radiocommunication cellulaire non synchronisé, le système de radiocommunication comprenant en outre au moins une unité mobile, et une liaison étant établie entre l'au moins une unité mobile et la première station radio, **caractérisé en ce qu'**un premier temps de propagation de signal (E1) d'un premier signal (S1) provenant de la première station radio est déterminé par la première station radio et transmis (2) à l'unité mobile, **en ce que** l'unité mobile mesure (3) ensuite une différence temporelle (ZD) entre une réception (ME1) du premier signal (S1) provenant de la première station radio et la réception (ME2) d'un deuxième signal (S2) provenant de la deuxième station radio, **en ce qu'**une première synchronisation avec la deuxième station radio est ensuite effectuée (4), **en ce qu'**un deuxième temps de propagation de signal (E2) du deuxième signal (S2) est ensuite déterminée par la deuxième station radio et transmise (5) à l'unité mobile et **en ce qu'**une erreur de synchronisation (SF) est ensuite déterminée (6) par l'unité mobile à partir de la différence temporelle mesurée (ZD) entre la réception (ME1, ME2) du premier et du deuxième signal (SI, S2), du premier temps de propagation de signal (E1) et du deuxième temps de propagation de signal (E2).

2. Procédé selon la revendication 1, **caractérisé en ce qu'**une mesure de la différence temporelle (ZD) entre une réception (ME1) du premier signal (S1) provenant de la première station radio et la réception (ME2) du deuxième signal (S2) provenant de la deuxième station radio n'est effectuée par l'unité mobile qu'après la première synchronisation de l'unité mobile avec la deuxième station radio.

3. Procédé selon l'une des revendications 1 à 2, **caractérisé en ce que** la première synchronisation est effectuée (4) par l'unité mobile pendant un transfert de liaison de la première à la deuxième station radio.

4. Procédé selon l'une des revendications 1 à 3, **caractérisé en ce que** l'unité mobile effectue (4), à la première synchronisation de l'unité mobile avec la deuxième station radio, une estimation de l'erreur de synchronisation (SF) entre les stations radio.

5. Procédé selon l'une des revendications 1 à 4, **caractérisé en ce que** l'erreur de synchronisation (SF) déterminée par l'unité mobile est mise à disposition (7) dans le système de radiocommunication pour d'autres unités mobiles.

6. Procédé selon l'une des revendications 1 à 5, **caractérisé en ce que** l'erreur de synchronisation (SF) déterminée par l'unité mobile est transmise (7) dans le système de radiocommunication au moyen de « Remote Opérations, Administration and Maintenance » (OAM).

7. Procédé selon l'une des revendications 1 à 5, **caractérisé en ce que** l'erreur de synchronisation (SF) déterminée par l'unité mobile est transmise dans le système de radiocommunication au moyen de signaux dits broadcast.

8. Procédé selon l'une des revendications 1 à 5, **caractérisé en ce que** l'erreur de synchronisation (SF) déterminée par l'unité mobile est transmise dans le système de radiocommunication au moyen d'une signalisation dite en monodiffusion.

9. Procédé selon l'une des revendications 1 à 8, **caractérisé en ce que** l'erreur de synchronisation déterminée (SF) est utilisée pour calculer « l'avance temporelle » de l'unité mobile.

10. Procédé selon l'une des revendications 1 à 9, **caractérisé en ce qu'**est utilisé, en tant que premier signal (S1) et en tant que deuxième signal (S2), un signal pilote associé individuellement à la station radio respective et qui est signalé (3) par la station radio respective à l'unité mobile dans un sens descendant.

11. Procédé selon l'une des revendications 1 à 10, **caractérisé en ce que** le premier ainsi que le deuxième temps de propagation de signal (E1, E2) sont déterminés (4) sur la base d'un mécanisme appelé « random access channel ».

12. Procédé selon l'une des revendications 1 à 11, **caractérisé en ce qu'**est utilisé, en tant que système de radiocommunication cellulaire, un système de radiocommunication selon un procédé dit de duplexage par division dans le temps ou un système de radiocommunication selon un procédé dit de duplexage par division de fréquence.

13. Procédé selon l'une des revendications 1 à 12, **caractérisé en ce qu'**est utilisé, en tant que système de radiocommunication cellulaire, un système de radiocommunication selon la norme dite Long Term Evolution ou LTE ou la norme Worldwide Interoperability for Microwave Access ou WiMAX.
